# EUROPEAN PATENT SPECIFICATION

(11) **EP 1 628 078 B1**
(45) Date of publication and mention of the grant of the patent: **25.07.2007**
(21) Application number: 05255116.5
(22) Date of filing: 18.08.2005
(51) Int. Cl.: F24C 15/34, A21B 3/04, A47J 27/04, A47J 39/00

(54) **Overheat steam cooker**
Kocher mit überhitztem Dampf
Cuiseur à vapeur surchauffée

(30) Priority: 19.08.2004 KR 2004065567
(43) Date of publication of application: 22.02.2006
(73) Proprietor: Samsung Electronics Co., Ltd., Suwon-si, Gyeonggi-Do (KR)
(72) Inventor: Kobayashi, Shozo, Yeongtong-gu, Suwon-si Gyeonggi-do (KR)
(74) Representative: Waddington, Richard

(56) References cited:
- EP-A- 0 270 984
- EP-A- 0 694 741
- EP-A- 1 541 930
- US-A- 3 007 596
- US-A- 5 442 161

## Description

The present invention relates to an overheat steam cooker, and more particularly, to an overheat steam cooker whose thermal efficiency is improved.

Generally an over-heat steam cooker is a device capable of cooking foods with the use of overheated steam, having an excellent thermal conductivity. With the over-heat steam cooker, cooking can be made variously: that is, through baking, boiling, thawing and the like. In using the over-heat steam cooker, foods can be cooked with little oxygen within the cooking chamber, causing no oxidization, and thus, the food cooked is excellent in taste.

As a conventional cooker using overheated steam, an overheat steam cooker is disclosed in Japanese Patent First Publication No. 2000-184964. This conventional over-heat steam cooker comprises a heating housing, a door opening and closing an opening part through which the foodstuff is accommodated in the heating housing, a heating means heating the wall of the heating housing, a heating housing temperature measuring means measuring a temperature inside of the heating housing, an intra-housing temperature displaying means displaying a temperature inside of the heating housing, a heating housing wall temperature measuring means measuring the temperature of the wall of the heating housing, an overheated steam generating means generating overheated steam to inject it to the heating housing, a cooking control means controlling the overheated steam generating means and a water tank supplying water to the overheated steam generating means.

The overheated steam generating means has a heating means heating water and steam, an inverter circuit driving the heating means, a flow rate control means controlling the flow rate of water to the heating means, a power control means controlling the power of the heating means and an overheated steam temperature measuring means measuring the temperature of generated steam.

With this configuration, the conventional overheat steam cooker can heat and cook the food without evaporating water therein with the use of overheated steam, making the cooked food excellent in taste. Especially, the overheat steam cooker is generally for household use, for which it can be convenient to use.

EP 1,541,930 discloses a steam oven having an exhaust pipe. Such document falls within the terms of Article 54 (3) EPC.

The present invention provides an overheat steam cooker with improved thermal efficiency.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
FIG. 1 is a perspective view of an overheat steam cooker according to the present invention;
FIG. 2 is a schematic exploded perspective view of an overheat steam cooker according to the present invention;
FIG. 3 is a schematic longitudinal section view of an overheat steam cooker according to the present invention;
FIG. 4 is a section view taken along line IV-IV of a heating housing of an overheat steam cooker according to the present invention;
FIG. 5 is a section view taken along line V-V of a overheated steam generator of an overheat steam cooker according to the present invention; and
FIG. 6 is a section view taken along line VI-VI of an exhaust pipe and an exhaust circulating pipe of an overheat steam cooker according to the present invention.

If the conventional overheat steam cooker is improved to be equipped with a means for improving the thermal efficiency, this would be more desirable.

Hereinafter, an exemplary embodiment of the present invention will be described with reference to the accompanying drawings.

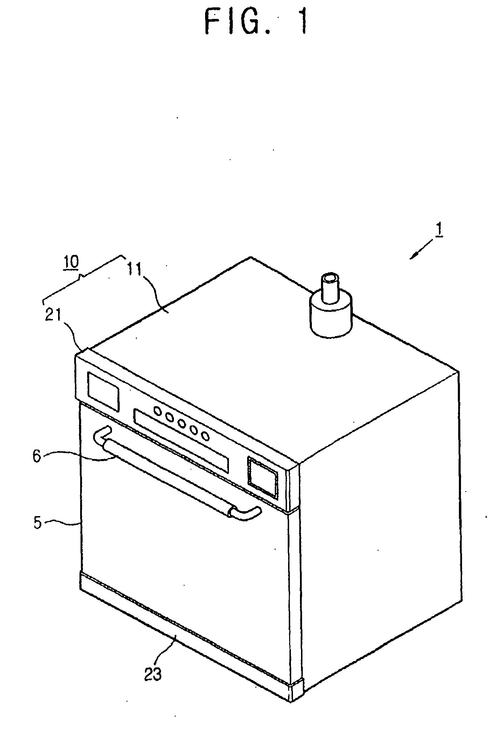

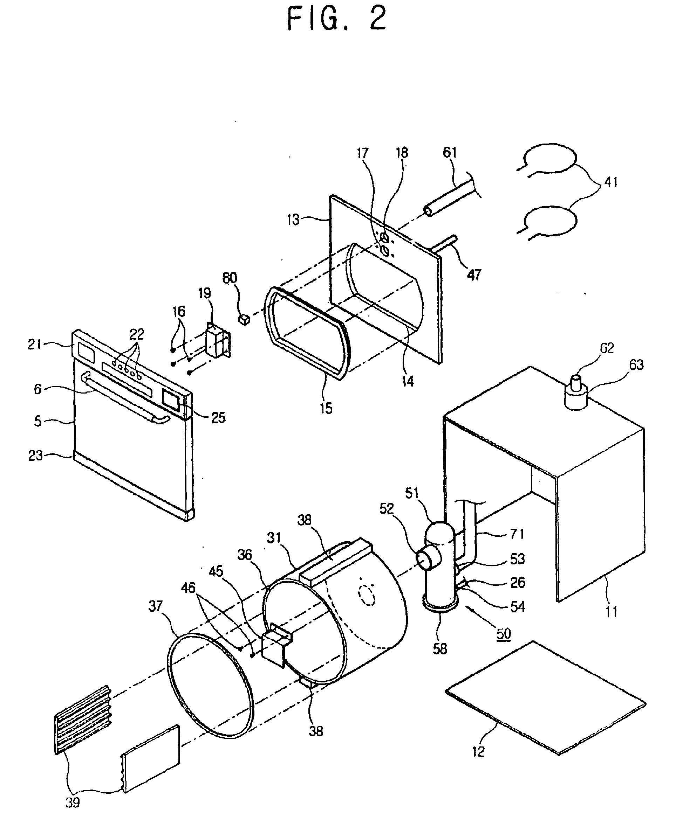

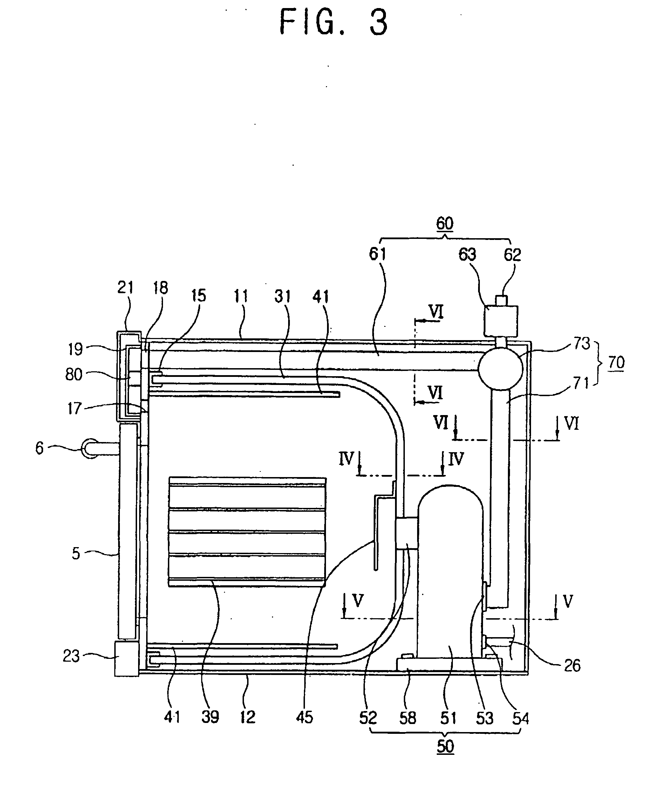

As illustrated in FIGS. 1 to 3, an overheat steam cooker according to the present invention comprises a heating housing 31 forming therein an accommodation space to accommodate such items as foods therein, an overheated steam generator 50 generating overheated steam which is supplied into the heating housing 31, and an exhausting device 60 having an exhaust pipe 61 through which the steam supplied into the heating housing 31 is discharged. The overheat steam cooker 1 further comprises an exhaust circulating device 70 supplying the steam discharged from the exhaust pipe 61 to the overheated steam generator 50, and a cooker cabinet 10 equipped with the heating housing 31 and the overheated steam generator 50, and the exhaust device 60 and the exhaust circulating device 70. The overheat steam cooker 1 still further comprises a filtering material 80 provided on at least one of the exhausting device 60, the exhaust circulating device 70 and the overheated steam generator 50, to filter the steam discharged from the heating housing 31. The overheat steam cooker 1 further comprises at least one of an intra-housing temperature sensor 47 measuring the internal temperature of the heating housing 31 and an exhaust temperature sensor (not shown) measuring the internal temperature of the exhaust pipe 61, and may further comprise a control means (not shown) controlling at least one of the temperatures of a flow selection part 73 (to be described later) of the exhaust circulating device 70 and the heating housing 31, based on a signal detected by at least one of the intra-housing temperature sensor 47 and the exhaust temperature sensor (not shown).

The cooker cabinet 10 comprises a cabinet cover 11 provided so as to cover the top, the side and the back of the heating housing 31, a front frame 13 provided in front of the heating housing 31, a base frame 12 provided on the bottom of the heating housing 31, supporting the heating housing 31 and the others, and a control panel 21, having control buttons 22, provided in the upper front of the front frame 13 so as to control the overheat steam cooker 1. Also, a door 5, having a handle 6, is provided in front of the cooker cabinet 10, the door opening and closing a door opening part of the front frame 13 to be described later.

The front frame 13 is formed with a door opening part 14 through which foods are accommodated in the heating housing 31, and a door shield member 15 manufactured with rubber or resin materials so as to maintain an airtightness and closely coupled with the door 5 when the door opening part 14 is closed, and mounted on the door opening part 14. On the front frame 13 are provided a heating housing exhaust port 17 communicating with the heating housing 31, discharging the steam within the heating housing 31, an exhaust pipe coupling port 18 communicating with the exhaust pipe 61, and an exhaust duct 19 coupled to the heating housing exhaust port 17 and the exhaust pipe coupling port 18, thereby guiding the steam discharged from the heating housing exhaust port 17 into the exhaust pipe coupling port 18. An intra-housing temperature sensor 47 is equipped on the front frame 13, so as to measure the temperature of an internal casing 32 (to be described later) of the heating housing 31. A lower cover 23 is provided in the lower side of the door 5 so as to prevent the lower space of the front frame 13 from being exposed.

The exhaust duct 19 is detachably coupled to the front frame 13 by use of screws 16, thereby guiding the steam discharged from the heating housing exhaust port 17 to the exhaust pipe coupling port 18.

On the control panel 21 are provided a plurality of buttons including a power button turning on or off the overheat steam cooker 1 and a water supplying part 25 supplying water to the overheated steam generator 50.

The water supplying part 25 is provided so as to be opened and closed by rotating it forwardly and backwardly to the control panel 21, being connected to the water absorbing part 54 and a water supplying pipe 26 of the overheated steam generator 50 to be described later. Accordingly, when water is supplied after rotating the water supplying part forwardly to thereby be opened, the water can be supplied to the overheated steam generator 50 through the water supplying pipe 26.

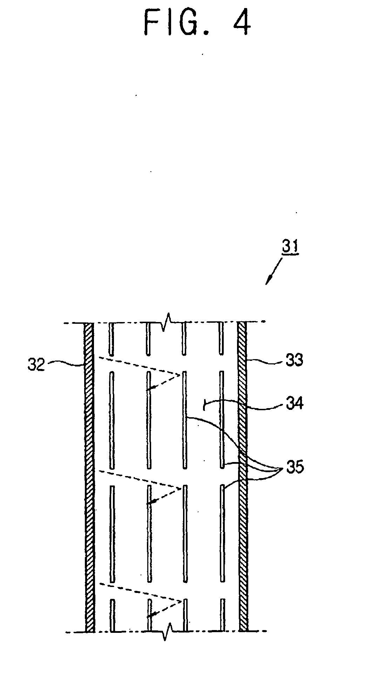

As shown in FIG. 4, the heating housing 31 comprises an internal casing 32 forming therein an accommodating space to accommodate foods therein, an external casing 33 separated outside the internal casing 32, and a vacuum insulation layer 34 between the internal casing 32 and the external casing 33. The heating housing 31 is shaped like a cylinder, comprising a heating housing opening part 36 forwardly opened so as to accommodate trays (not shown) on which foods are put, a heating housing shield member 37 manufactured with rubber or resin materials so as to maintain an airtightness with and closely coupled to the front frame 13 and mounted on the heating housing opening part 36, and a support frame 38 whose outside is coupled to the external casing 33 and the front frame 13, supporting the heating housing 31 to be coupled to the front frame 13. On the heating housing 31 is mounted a heater 41 heating the heating housing 31 to a predetermined degree of temperature.

Inside the internal casing 32 is provided a wire rack 39 formed with multiple layers so as to put containers such as trays (not shown) thereon. The wire rack 39 is provided in pair, both of which are respectively in the left and the right. The internal casing 32 is provided with a steam cover 45 dispersing the steam discharged from the steam discharging part 52 of the overheated steam generator 50 so as to prevent the steam from directly contacting the foods.

The steam cover 45 is separately installed in the transverse direction to the steam discharging direction, corresponding to a steam discharging part 52 of the overheated steam generator 50 (to be described later) provided in the rear space of the internal casing 32. The steam cover 45 may be coupled to the inside rear space of the internal casing 32 by use of screws 46. Accordingly, the steam discharged from the steam discharging part 52 is first collided with the steam cover 45, thereby preventing the discharged steam excessively heating foods close to the steam discharging part 52 due to direct contact of the discharged steam with the foods. In addition, since the steam collided with the steam cover 45 turns back to both sides of or the lower side of the steam cover 45 and is dispersed over the whole inside of the heating housing 31, thereby heating evenly the foods accommodated in the heating housing 31.

The heating housing shield member 37 is closely coupled to the front ends of the internal casing 32 and the external casing 33 so as to allow a space between the internal casing 32 and the external casing 33 to be maintained almost in a vacuum. The internal casing 32 and the external casing 33 may be made with metal materials having a strong thermal resistance. Accordingly, heat transmission due to conduction and convection from the internal casing 32 to the external casing 33 may be suppressed owing to the vacuum insulation layer 34, thereby enhancing the thermal efficiency.

On the vacuum insulation layer may be provided a radiation shield member 35 preventing the heat transmitted to the internal casing 32 from being radiated to the external casing 33.

As illustrated in FIG. 4, the radiation shield member 35 is disposed substantially in parallel with the planes of the internal casing 32 and the external casing 33, between the internal casing 32 and the external casing 33. The radiation shield member 35 may be provided in multiple layers, which are separated one another. The radiation shield member 35 formed with multiple layers is supported by a support stand (not shown) coupled in the transverse direction to the planes of the internal casing 32 and the external casing 33 and may be installed separately one another. However, one side of the radiation shield member 35 may be coupled to at least one of the internal casing 32 and the external casing 33 and then disposed on the vacuum insulation layer 34. The radiation shield member 35 may be made with metal materials such as aluminum so as to allow the heat radiated from the internal casing to be reflected toward the internal casing 32. Also, by providing the radiation shield member 35 on the vacuum insulation layer 34, heat transmission from the internal casing 32 to the external casing 33 due to radiation as well as conduction and convection may be prevented, thereby further improving the thermal efficiency.

A heater 41 heats the heating housing 31 to the predetermined degree of temperature and plays a role of preventing dew condensation of the steam supplied into the heating housing 31. The heater 41 may be provided in pair, both of which are respectively displaced on the upper side and the lower side of the internal casing 32. The heater 41 is supportedly coupled to the front fame 13 and then displaced in the internal casing 32. The heater 41 may employ a sheath heater elongated with the shape of a pipe or other kind of a heater.

The overheated steam generator 50 comprises a generator body 51 generating overheated steam, a generator support stand 58 on which the generator body 51 is coupled to the base frame 12 of the cooker cabinet 10, a steam discharging part 52 connected to the generator body 51 and the heating housing 31, discharging overheated steam to the heating housing 31, an exhaust absorbing part 53 connected to an exhaust circulating pipe 71 of an exhaust circulating device 70 to be described later, absorbing the exhaust, and a water absorbing part 54 connected to the water supplying part 25 through the water supplying pipe 26, absorbing the water.

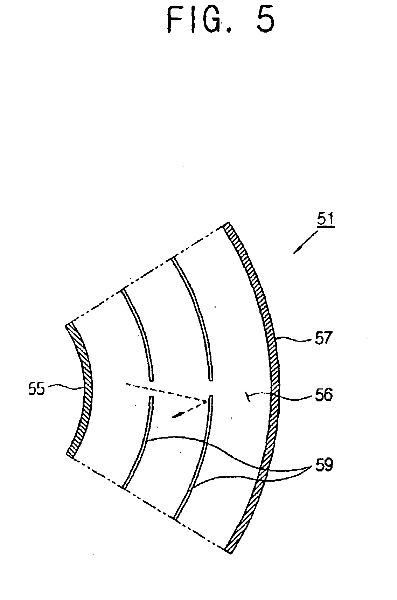

The generator body 51 is provided with a first heating part (not shown) heating the water absorbed from the water absorbing part 54 to generate steam, and a second heating part (not shown) heating the steam generated by the first heating part (not shown) to generate overheated steam. As shown in FIG. 5, the generator body 51 is further provided with a generator internal casing 55 forming therein an internal space to accommodate the first and the second heating parts (not shown) therein to generate overheated steam, and a generator external casing 57 spacedly disposed to form a generator vacuum insulation layer 56 between it and the generator internal casing 44. The generator internal casing 55 and the generator external casing 56 may be provided like a cylinder, but may be shaped like a rectangular container or a polygonal container. With this configuration, heat transmission from the generator internal casing 55 to the generator external casing 57 due to conduction and convection may be prevented owing to the generator vacuum insulation layer 56, thereby further improving the thermal efficiency of the overheated steam generator 50.

The generator vacuum insulation layer 56 may be provided with a generator radiation shield member 59 so as to exclude the heat transmitted to the generator internal casing 55 from being radiated to the generator external casing 57.

As illustrated in FIG. 5, the generator radiation shield member 59 may be disposed in parallel with the generator internal casing 55 and the generator external casing 57 between them. The generator radiation shield member 59 may be provided in multiple layers, which are separate one another in the radiation direction. Mounting and material of the generator radiation shield member are similar to those of the radiation shield member 35 described above, and thus, detailed description of the generator radiation shield member 59 will be omitted. However, since the temperature requirement of the overheated steam generator 50 may be different from that of the heating housing 31, the generator vacuum insulation layer 56 may be provided with different degree of vacuum pressure from the vacuum insulator layer 34, and the generator radiation shield member 59 may be made with different kind of materials from the radiation shield member 35 of the heating housing 31. Under this configuration, by providing the generator radiation shield member 59 on the generator vacuum insulation layer 56, heat transmission from the generator internal casing 55 to the generator external casing 57 due to radiation as well as conduction and convection may be prevented, thereby further improving the thermal efficiency.

The exhausting device 60 discharges the steam discharged from the heating housing 31 to the outside. The exhausting device 60 comprises an exhaust pipe 61 and an external duct 62 guiding the steam discharged from the exhaust pipe to the outside. The exhausting device 60 may further comprise an exhaust heat exchanging part 63 connected to the exhaust pipe 61, cooling the steam discharged to the outside through the exhaust pipe 61.

The exhaust heat exchanging part 63 is provided between the exhaust pipe 61 and the external duct 62, cooling the steam of high temperature discharged to the outside from the exhaust pipe 61 and discharging it to the outside. The exhaust heat exchanging part 63 may be provided so as to be exposed to the outside of a cabinet cover 11 as illustrated in FIGS. 1 to 3, but may also be provided so as to be accommodated inside the cabinet cover 11. With this configuration, increase in surface temperature of the external duct due to the steam discharged through the exhaust heat exchanging part 63 may be prevented.

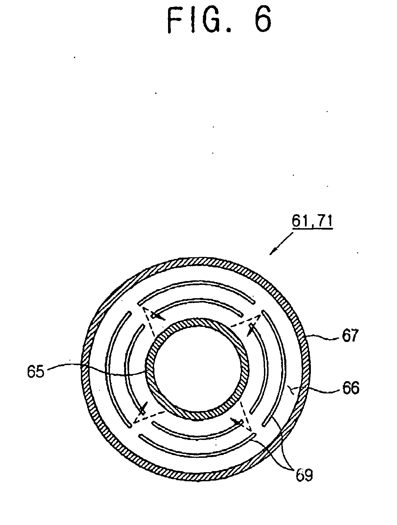

One side of the exhaust pipe 61 is coupled to the exhaust pipe coupling port 18 of the front frame 13 and the other side thereof is coupled to the exhaust heat exchanging part 63. Between the exhaust pipe 61 and the exhaust heat exchanging part 63 is provided a flow selection part 73 of the exhaust circulating device 70 to be described later. As shown in FIG. 6, the exhaust pipe 61 comprises an internal pipe 65 through which the steam discharged from the heating housing 31 passes, and an external pipe 67 provided outside the internal pipe 65, spacedly disposed so as to form a pipe vacuum insulation layer 66 between the internal pipe 65 and the external pipe 67. The internal pipe 65 and the external pipe 67 have cylindrical sections but may have rectangular sections or other polygonal sections. The exhaust pipe 61 may be provided with an exhaust temperature sensor (not shown) measuring the temperature of the steam passing through the exhaust pipe 61. Accordingly heat transmission from the internal pipe 65 to the external pipe 67 due to radiation as well as conduction and convection may be prevented owing to the pipe vacuum insulation layer 66, thereby improving the thermal efficiency of the exhaust pipe 61.

The pipe vacuum insulation layer 66 may be provided with at least one pipe radiation shield member 69 so as to exclude the heat transmitted to the internal pipe 65 from the steam from being radiated to the external pipe 67.

As illustrated in FIG. 6, the pipe radiation shield member 69 is disposed between the internal pipe 65 and the external pipe 67 in the circumferential direction of the internal pipe 65 and the external pipe 67. Mounting and material of the pipe radiation shield member 69 are similar to those of the radiation shield member 35 described above, and thus, detailed description of the generator radiation shield member 59 will be omitted. By providing the pipe radiation shield member 69 on the pipe vacuum insulation layer 66, heat transmission from the internal pipe 65 to the external pipe 67 due to radiation as well as conduction and convention may be prevented, thereby further improving the thermal efficiency.

The exhaust circulating device 70 comprises an exhaust circulating pipe 71 provided so as to supply the steam discharged from the exhaust pipe 61 to the overheated steam generator 50, and a flow selection part 73 provided between the exhaust pipe 61 and the exhaust heat exchanging part 71 to selectively discharge the steam discharged to the exhaust pipe 61 to the outside or guide it to the exhaust circulating pipe 71.

The flow selection part 73 is provided between the exhaust pipe 61 and the exhaust circulating pipe 71, and the exhaust heat exchanging part 63, thereby selectively discharging the steam discharged from the exhaust pipe 61 to at least one of the exhaust circulating pipe 71 and the exhaust heat exchanging part 63. The flow selection part 73 is provided as a belt-type and may be controlled by a control part (not shown) or by a user.

One side of the exhaust circulating pipe 71 is coupled to the flow selection part 73 and the other side thereof is coupled to the exhaust absorbing part 53 of the overheated steam generator 50. The exhaust circulating pipe 71 is provided with the same configuration as the exhaust pipe 61. Namely, as shown in FIG. 6, the exhaust circulating pipe 71 comprises an internal pipe 75 through which the steam discharged from the exhaust circulating pipe 71 passes, and an external pipe 77 provided outside the internal pipe, spacedly disposed so as to form a pipe vacuum insulation layer 76 between the internal pipe 75 and the external pipe 77. Accordingly, heat transmission due to conduction and convention from the internal pipe 75 to the external pipe 77 may be prevented owing to the pipe vacuum insulation layer 76, thereby improving the thermal efficiency of the exhaust circulating pipe 71.

The pipe vacuum insulation layer 76 may be provided with at least one pipe radiation shield member 79 so as to exclude the heat transmitted to the internal pipe 75 from the steam from being radiated to the external pipe 77. By providing the pipe radiation shield member 79 on the pipe vacuum insulation layer 76, heat transmission from the internal pipe 75 to the external pipe 77 due to radiation as well as conduction and convection may be prevented, thereby further improving the thermal efficiency.

A filtering material 80 is disposed on the discharging path of the steam so as to filter oil, dust or bad smell included in the steam discharged from the heating housing 31. The filtering material 80 is accommodated inside the exhaust duct 19, filtering the steam passing through the exhaust duct 19, and can be exchanged with a new one by disassembling the exhaust duct 19 from the front frame 13. However, the filtering material 80 may be provided on the exhaust pipe 61 or the heating housing 31 so as to filter the steam discharged from the heating housing 31. Also, the filtering material 80 may be provided on the steam discharging part 52 of the overheated steam generator 50 so as to filter the steam supplied into the heating housing 31.

A controller (not shown) can control the temperatures of the flow selection part 73 and the heating housing 31 based on the signals detected from the intra-housing temperature sensor 47 and an exhaust temperature sensor (not shown). For example, the controller (not shown) activates at least one of heater 41 and the overheated steam generator 50 based on the signal detected from the intra-housing temperature sensor 47, to maintain the temperature of the heating housing 31 within the predetermined range of temperature. The controller (not shown) can also control the flow selection part 73 so as to allow the steam passing through the exhaust pipe 61 to be moved to the exhaust circulating pipe 71 when the temperature detected from the exhaust temperature sensor (not shown) is over the predetermined temperature, and control the flow selection part 73 so as to allow the steam passing through the exhaust pipe 73 to be moved to the exhaust heat exchanging part 63 when the temperature detected from the exhaust temperature sensor (not shown) is below the predetermined temperature.

With this configuration, an operational process of the overheat steam cooker 1 according to the present invention will be described.

First, the food to be cooked is accommodated inside the heating housing 31 and power is supplied to the overheat steam cooker 1. Accordingly, the heater 41 is heated, increasing the temperature of the heating housing 31, and overheated steam is generated from the overheated steam generator 50 and subsequently flown into the heating housing 31. Then the food is cooked by the overheated steam. The steam within the heating housing 31 is discharged to the exhaust heat exchanging part 63 by the flow selection part 73 through the exhaust pipe 61 or flown into the overheated steam generator 50 again through the exhaust circulating pipe 71, which can be reused.

As described above, the overheat steam cooker according to the present invention is provided with a vacuum insulation layer between the internal casing and the external casing of the heating housing, suppressing the heat from being transmitted from the internal casing to the external casing, to thereby improve the thermal efficiency. Further, by providing the radiation shield member on the vacuum insulation layer, heat transmission from the internal casing to the external casing due to radiation may be prevented, thereby further improving the thermal efficiency.

The overheat steam cooker according to the present invention is also provided with a generator vacuum insulation layer between the generator internal casing and the generator external casing of the overheated steam generator, suppressing heat transmission, to thereby improve the thermal efficiency. Further, by providing the generator radiation shield member on the generator vacuum insulation layer, heat transmission from the generator internal casing to the generator external casing due to radiation may be prevented, thereby further improving the thermal efficiency.

In addition, the overheat steam cooker according to the present invention is provided with a pipe vacuum insulation layer between the exhaust pipe, and the internal pipe and the external pipe of the heating housing, suppressing heat transmission, to thereby improve the thermal efficiency. Further, by providing the pipe radiation shield member on the pipe vacuum insulation layer, heat transmission from the internal pipe to the external pipe due to radiation may be prevented, thereby improving more the thermal efficiency.

Further, the overheat steam cooker according to the present invention is provided with an exhaust circulating device, flowing the steam discharged into the overheated steam generator again, which can be reused, thereby improving the energy efficiency.

The overheat steam cooker according to the present invention is provided with a filtering material, thereby filtering the steam discharged from the heating housing.

Although the present invention has been described in connection with the exemplary embodiments illustrated in the accompanying drawings, it should be understood that the present invention is not limited thereto and those skilled in the art can make various modifications and changes without departing from the scope of the invention, as defined by the appended claims.

## Claims

1. An overheat steam cooker, comprising:
a heating housing (31) comprising
an internal casing (32) forming therein an accommodating space to accommodate foods,
an external casing (33) spacedly disposed outside the internal casing (32), and
a vacuum insulation layer (34) formed between the internal casing (32) and the external casing (33);
an overheated steam generator (50) which is operated to generate overheated steam to be supplied into the heating housing (31); and
an exhaust: device (60) having an exhaust pipe (61) adapted to discharge the steam supplied into the heating housing (31),
whereby the vacuum insulation layer (34) of the heating housing (31) is provided with a radiation shield member (35) which is adapted to reduce the transmission of heat from the internal casing (32) to the external casing (33).

2. The cooker as claimed in claim 1, wherein the radiation shield member (35) comprises multiple layers, which are separated from one another.

3. The cooker as claimed in any preceding claim, further comprising:
an exhaust circulating device (70) comprising
an exhaust circulating pipe (71) which is adapted to supply steam discharged from the exhaust pipe (61) to the overheated steam generator (50), and
a flow selection part (73) disposed between the exhaust pipe (61) and the exhaust circulating pipe (71), which is adapted to selectively discharge steam from the exhaust pipe (61) to an outside of the cooker or to the exhaust circulating pipe (71).

4. The cooker as claimed in claim 3, further comprising:
at least one of an intra-housing temperature sensor (47) which is operable to measure the internal temperature of the heating housing (31) and an exhaust temperature sensor which is operable to measure the internal temperature of the exhaust pipe (61); and
a controller which is operable to control at least one of the temperatures of the flow selection part (73) and the heating housing (31) based on signals detected from at least one of the intra-housing temperature sensor (47) and the exhaust temperature sensor.

5. The cooker as claimed in any preceding claim, wherein the overheated steam generator (50) comprises:
a generator internal casing (32) forming therein an internal space within which overheated steam is, in use, generated,
a generator external casing (33) spacedly disposed from the generator internal casing (32), and
a generator vacuum insulation layer (34) disposed between the generator internal casing (32) and the generator external casing (33).

6. The cooker as claimed in claim 5, wherein at least one of the exhaust pipe (61) and the exhaust circulating pipe (71) comprise:
an internal pipe (65) adapted such that steam may pass therethrough;
an external pipe (67) spacedly disposed from the internal pipe (65); and
a pipe vacuum insulation layer (66) disposed between the internal pipe (65) and the external pipe (67).

7. The cooker as claimed in claim 6, wherein
the generator vacuum insulation layer (34) of the overheated steam generator (50) is provided with at least one generator radiation shield member (35), which is adapted to reduce the transmission of heat from the generator internal casing (32) to the generator external casing (33), and
the pipe vacuum insulation layer (66), of the at least one of the exhaust pipe (61) and the exhaust circulating pipe (71), is provided with at least one pipe radiation shield member (69), which is adapted to reduce the transmission of heat from the internal pipe (65) to the external pipe (67).

8. The cooker as claimed in any preceding claim, wherein the exhaust device (60) further comprises a pipe radiation shield member (69), coupled to the exhaust pipe (61), which is operable to cool steam discharged to an outside of the cooker through the exhaust pipe (61).

9. The cooker as claimed in any preceding claim, wherein at least one of the exhaust device (60), the exhaust circulating device (70) and the overheated steam generator (50) is provided with a filtering material which is adapted to filter steam discharged from the heating housing (31).

10. The cooker as claimed in any preceding claim, wherein the heating housing (31) is provided with at least one heater for heating.

11. The cooker as claimed in any preceding claim, wherein the internal casing (32) of the heating housing (31) is provided with a steam cover (45), which is adapted to disperse steam from the overheated steam generator (50) within the internal casing (32) of the heating housing (31).

## Patentansprüche

1. Ein mit überhitztem Dampf arbeitendes Kochgerät, umfassend:
ein Erwärmungsgehäuse (31) mit
einem Innengehäuse (32), in dem ein Aufnahmeraum zur Aufnahme von Nahrungsmitteln ausgebildet ist,
einem Außengehäuse (33), das beabstandet außerhalb des inneren Gehäuses (32) angeordnet ist, und
einer Vakuumisolierschicht (34), die zwischen dem Innengehäuse (32) und dem Außengehäuse (33) ausgebildet ist;
einen Generator (50) zum Erzeugen von überhitztem Dampf, der betrieben wird, um überhitzten Dampf zu erzeugen, der dem Erwärmungsgehäuse (31) zugeführt werden soll; und
eine Auslassvorrichtung (60) mit einem Auslassrohr (61), die dazu geeignet ist, den dem Erwärmungsgehäuse (31) zugeführten Dampf auszulassen,
wobei die Vakuumisolierschicht (34) des Erwärmungsgehäuses (31) mit einem Strahlungsabschirmelement (35) versehen ist, das dazu geeignet ist, die Wärmeübertragung von dem lnnengehäuse (32) auf das Außengehäuse (33) zu verringern.

2. Kochgerät nach Anspruch 1, wobei das Strahlungsabschirmelement (35) mehrere Schichten umfasst, die voneinander getrennt sind.

3. Kochgerät nach einem der vorhergehenden Ansprüche, ferner umfassend:
eine Auslasszirkulationsvorrichtung (70) mit
einem Auslasszirkulationsrohr (71), das dazu geeignet ist, Dampf, der von dem Auslassrohr (61) ausgelassen wurde, dem Generator (50) zum Erzeugen von überhitztem Dampf zuzuführen, und
einem Stromauswahlteil (73), das zwischen dem Auslassrohr (61) und dem Auslasszirkulationsrohr (71) angeordnet und dazu geeignet ist, den Dampf selektiv von dem Auslassrohr (61) zu einer Außenseite des Kochgeräts oder zu dem Auslasszirkulationsrohr (71) abzulassen.

4. Kochgerät nach Anspruch 3, ferner umfassend:
wenigstens einen Intra-Gehäuse-Temperatursensor (47), der betrieben werden kann, um die Innentemperatur des Erwärmungsgehäuses (31) zu messen, und einen Auslasstemperatursensor, der betrieben werden kann, um die Innentemperatur des Auslassrohrs (61) zu messen; und
eine Steuereinrichtung, die betrieben werden kann, um wenigstens eine der Temperaturen des Stromauswahlteils (73) und des Erwärmungsgehäuses (31) basierend auf Signalen zu steuern, die von dem Intra-Gehäuse-Temperatursensor (47) und/oder von dem Auslasstemperatursensor erfasst wurden.

5. Kochgerät nach einem der vorhergehenden Ansprüche, wobei der Generator (50) zum Erzeugen von überhitztem Dampf umfasst:
ein Generatorinnengehäuse (32), in dem ein Innenraum ausgebildet ist, in dem während des Betriebs überhitzter Dampf erzeugt wird,
ein Generatoraußengehäuse (33), das beabstandet von dem Generatorinnengehäuse (32) angeordnet ist, und
eine Generatorvakuumisolierschicht (34), die zwischen dem Generatorinnengehäuse (32) und dem Generatoraußengehäuse (33) angeordnet ist.

6. Kochgerät nach Anspruch 5, wobei wenigstens das Auslassrohr (61) oder das Auslasszirkulationsrohr (71) aufweist:
ein Innenrohr (65), das dazu geeignet ist, dass Dampf durch dieses geleitet werden kann;
ein Außenrohr (67), das beabstandet von dem Innenrohr (65) angeordnet ist; und
eine Rohrvakuumisolierschicht (66), die zwischen dem Innenrohr (65) und dem Außenrohr (67) angeordnet ist.

7. Kochgerät nach Anspruch 6, wobei
die Generatorvakuumisolierschicht (34) des Generators (50) zum Erzeugen von überhitztem Dampf wenigstens mit einem Generatorstrahlungsabschirmelement (35) versehen ist, das dazu geeignet ist, die Übertragung von Wärme von dem Generatorinnengehäuse (32) auf das Generatoraußengehäuse (33) zu reduzieren, und
die Rohrvakuumisolierschicht (66) wenigstens des Auslassrohrs (61) oder des Auslasszirkulationsrohrs (71) mit wenigstens einem Rohrstrahlungsabschirmelement (69) versehen ist, das dazu geeignet ist, die Übertragung von Wärme von dem Innenrohr (65) auf das Außenrohr (67) zu reduzieren.

8. Kochgerät nach einem der vorhergehenden Ansprüche, wobei die Auslassvorrichtung (60) ferner ein Rohrstrahlungsabschirmelement (69) umfasst, das mit dem Auslassrohr (61) verbunden ist und derart betrieben werden kann, dass der Dampf, der zu einer Außenseite des Kochgeräts durch das Auslassrohr (61) abgelassen wird, gekühlt wird.

9. Kochgerät nach einem der vorhergehenden Ansprüche, wobei die Auslassvorrichtung (60) und/oder die Auslasszirkulationsvorrichtung (70) und/oder der Generator (50) zum Erzeugen von überhitztem Dampf mit einem Filtermaterial versehen ist, das dazu geeignet ist, den von dem Erwärmungsgehäuse (31) ausgelassenen Dampf zu filtern.

10. Kochgerät nach einem der vorhergehenden Ansprüche, wobei das Erwärmungsgehäuse (31) mit wenigstens einer Heizeinrichtung zum Erwärmen versehen ist.

11. Kochgerät nach einem der vorhergehenden Ansprüche, wobei das Innengehäuse (32) des Erwärmungsgehäuses (31) mit einer Dampfabdeckung (45) versehen ist, die dazu geeignet ist, Dampf von dem Generator (50) zum Erzeugen von überhitztem Dampf innerhalb des Innengehäuses (32) des Erwärmungsgehäuses (31) zu verteilen.

## Revendications

1. Cuiseur à vapeur surchauffée comprenant :
un compartiment de cuisson (31) comprenant
une enveloppe interne (32) formant à l'intérieur de celui-ci un espace de réception pour recevoir des aliments,
une enveloppe externe (33) disposée à distance à l'extérieur de l'enveloppe interne (32),
et une couche d'isolation sous-vide (34) formée entre l'enveloppe interne (32) et l'enveloppe externe (33) ;
un générateur de vapeur surchauffée (50) qui est actionné pour produire de la vapeur surchauffée qui est alimentée dans le compartiment de cuisson (31) ;
et un dispositif d'évacuation (60) muni d'un conduit d'évacuation (61) adapté pour libérer la vapeur alimentée dans le compartiment de cuisson (31), dans lequel la couche d'isolation sous-vide (34) du compartiment de cuisson (31) est munie d'un élément de protection contre les rayonnements (35) qui est adapté pour réduire la transmission de chaleur provenant de l'enveloppe interne (32) vers l'enveloppe externe (33).

2. Cuiseur selon la revendication 1, dans lequel l'élément de protection contre les rayonnements (35) comprend des couches multiples séparées les unes des autres.

3. Cuiseur selon l'une quelconque des revendications précédentes, comprenant en outre :
un dispositif de circulation d'évacuation (70) comprenant
un conduit de circulation d'évacuation (71) adapté pour fournir de la vapeur libérée du conduit d'évacuation (61) vers le générateur de vapeur surchauffée (50), et
une pièce de sélection d'écoulement (73) placée entre le conduit d'évacuation (61) et le conduit de circulation d'évacuation (71) adaptée pour évacuer la vapeur de manière sélective depuis le conduit d'évacuation (61) vers l'extérieur du cuiseur ou vers le conduit de circulation d'évacuation (71).

4. Cuiseur selon la revendication 3, comprenant en outre :
au moins un d'un capteur de température intra-compartiment (47) qui peut être actionné pour mesurer la température interne du compartiment de cuisson (31) et d'un capteur de température d'évacuation qui peut être actionné pour mesurer la température interne du conduit d'évacuation (61) ; et
un contrôleur qui peut être actionné pour contrôler au moins une des températures de la pièce de sélection d'écoulement (73) et du compartiment de cuisson (31) en se basant sur des signaux détectés par au moins un des capteur de température intra-compartiment (47) et capteur de température d'évacuation.

5. Cuiseur selon l'une quelconque des revendications précédentes, dans lequel le générateur de vapeur surchauffée (50) comprend :
une enveloppe interne du générateur (32) formant à l'intérieur de celui-ci un espace intérieur dans lequel de la vapeur surchauffée est produite pendant l'utilisation,
une enveloppe externe du générateur (33) disposée à distance de l'enveloppe interne du générateur (32) et
une couche d'isolation sous-vide du générateur (34) placée entre l'enveloppe interne du générateur (32) et l'enveloppe externe du générateur (33).

6. Cuiseur selon la revendication 5, dans lequel au moins un des conduits d'évacuation (61) et conduit de circulation d'évacuation (71) comprend :
un conduit interne (65) adapté de manière à ce que la vapeur puisse passer au travers de celui-ci ;
un conduit externe (67) disposé à distance du conduit interne (65)
et une couche d'isolation sous-vide de conduit (66) placée entre le conduit interne (65) et le conduit externe (67).

7. Cuiseur selon la revendication 6, dans lequel la couche d'isolation sous-vide (34) du générateur de vapeur surchauffée (50) est munie d'au moins un élément de protection contre les rayonnements du générateur (35) qui est adapté pour réduire la transmission de chaleur provenant de l'enveloppe interne du générateur (32) vers l'enveloppe externe du générateur (33), et
la couche d'isolation sous-vide de conduit (66) de l'au moins un des conduit d'évacuation (61) et conduit de circulation d'évacuation (71), est munie d'au moins un élément de protection contre les rayonnements de conduit (69) qui est adapté pour réduire la transmission de chaleur provenant du conduit interne (65) vers le conduit externe (67).

8. Cuiseur selon l'une quelconque des revendications précédentes, dans lequel le dispositif d'évacuation (60) comprend en outre un élément de protection contre les rayonnements de conduit (69), couplé au conduit d'évacuation (61) qui peut être actionné pour refroidir la vapeur libérée vers l'extérieur du cuiseur à travers le conduit d'évacuation (61).

9. Cuiseur selon l'une quelconque des revendications précédentes, dans lequel au moins l'un du dispositif d'évacuation (60), du dispositif de circulation d'évacuation (70) et du générateur de vapeur surchauffée (50) est muni d'un matériau filtrant adapté pour filtrer la vapeur libérée par le compartiment de cuisson (31).

10. Cuiseur selon l'une quelconque des revendications précédentes, dans lequel le compartiment de cuisson (31) est muni d'au moins un élément chauffant pour chauffer.

11. Cuiseur selon l'une quelconque des revendications précédentes, dans lequel l'enveloppe interne (32) du compartiment de cuisson (31) est munie d'un couvercle de vapeur (45) qui est adapté pour disperser la vapeur provenant du générateur de vapeur surchauffée (50) à l'intérieur de l'enveloppe interne (32) du compartiment de cuisson (31).
